# EUROPÄISCHE PATENTSCHRIFT

(11) **EP 1 785 028 B1**
(45) Veröffentlichungstag und Bekanntmachung des Hinweises auf die Patenterteilung: **28.12.2016**
(21) Anmeldenummer: 06123585.9
(22) Anmeldetag: 07.11.2006
(51) Int. Cl.: A01G 3/00

(54) **Schneidvorrichtung zum Trennen von Ranken oder Teilen von Pflanzen**
Cutting device for separating stolons or parts of plants
Appareil de coupe pour séparer les stolons ou des parties de plantes

(30) Priorität: 10.11.2005 DE 202005017706 U
(43) Veröffentlichungstag der Anmeldung: 16.05.2007
(73) Patentinhaber: Heuling Maschinenbau Gmbh & Co. KG, 49326 Melle-Neunkirchen (DE)
(72) Erfinder: Schulze Heuling, Ulrich, 48231 Warendorf (DE)
(74) Vertreter: Flötotto, Hubert

(56) Entgegenhaltungen:
- FR-A1- 2 258 120
- US-A- 1 665 998
- US-A- 2 583 571
- US-A- 5 253 468
- US-B1- 6 286 605

## Beschreibung

Die Erfindung betrifft eine Schneidvorrichtung und ein die Schneidvorrichtung tragendes Fahrgestell zum Trennen von Ranken oder Teilen von Pflanzen, die in Reihen und / oder auf Dämmen wachsen, wobei die Schneidvorrichtung aus wenigstens einer Hebevorrichtung sowie einer Schneideinrichtung besteht, die seitlich parallel zur Reihe oder zum Damm angeordnet ist, und wobei die Hebevorrichtung die seitlich aus der Reihe herausragenden Pflanzenstängel oder Ranken vom Erdreich oder einer Folie in einen für die hinter oder vor der Hebevorrichtung angeordneten Schneideinrichtung zugänglichen Schneidhorizont (H) anhebt, und die Hebevorrichtung einen Rotor mit einer Drehrichtung mit oder gegen die Fahrtrichtung der Schneidvorrichtung umfasst, wobei die Hebevorrichtung aus einem Rotor mit einem Zwischenraum besteht, in den die Schneideinrichtung greift, wobei der Rotor selbst über radial angeordnete, elastisch ausgebildete Finger zum Heben der Ranken verfügt, und dieser aus zwei auf einer Welle angeordneten Rotoren und besteht, die den Zwischenraum zwischen sich bilden, in den die Schneideinrichtung greift.

Immer mehr Erdbeeren werden aus kulturtechnischen Gründen auf kleinen Dämmen angebaut. Diese Dämme werden mit Kunststoff- oder Biofolie abgedeckt, um Erosion durch Regen und Wind zu verhindern. Die Wasser- und Nährstoffversorgung wird über integrierte Tropfschläuche sichergestellt. Zum Ende der Ernteperiode beginnen die Pflanzen Ranken zu schieben und an deren Ende Ableger zu bilden, die zur Pflanzenvermehrung genutzt werden. In Kulturen zur Beerenproduktion sind sie jedoch unerwünscht, da sie der Pflanze Kraft nehmen. Deshalb werden diese Ranken ein- oder mehrmals im Jahr abgeschnitten. Diese Arbeit wird überwiegend von Hand ausgeführt, was sehr zeitaufwendig und daher kostenintensiv ist.

Aus dem Stand der Technik gemäß der DE 55 45 99 sind hier auch bereits schon mechanische Mittel bekannt, mit denen versucht wurde, die Ranken zu schneiden. Dabei ergibt sich das Problem, dass man die Ranken nur schneiden kann ohne die Folie zu zerstören, wenn man sie anhebt, um einen Sicherheitsabstand zwischen Ranken und Folie zu erreichen. Dazu wurde durch Erzeugen eines Unterdruckes versucht, die Ranken anzusaugen, was jedoch leicht dazu führt, dass die Folie mit angesaugt und zerstört wird. Haben die Ranken bereits am Ende erste Wurzeln gebildet, halten diese die Ranken fest und verhindern ein Ansaugen.

Eine andere Schneidvorrichtung zum Trennen von Ranken oder Teilen von Pflanzen, die in Reihen oder auch auf Dämmen wachsen, ist aus der FR 2 258 120 bekannt. Die Schneidvorrichtung besteht aus einem Fahrgestell mit wenigstens einer Hebevorrichtung sowie einer Schneideinrichtung. Die Hebevorrichtung wird dabei aus rotierenden Bürstenwalzen gebildet, die unter einer Schrägen zur Fahrrichtung in dem Fahrgestell angeordnet sind. Infolge der Bürstenschrägstellung wird erreicht, dass sich zum Boden hin ein sich verengender Spaltraum bildet. Dieser verengende Spaltraum der Bürsten hebt die Pflanzen an, so dass sie einer Schneideinrichtung zugeführt werden. Das Fahrgestell als solches ist ebenfalls höhenverstellbar gelagert, so dass eine anpassbare Höhe der Bürsten bzw. der Schneidvorrichtung gegeben ist. Gemäß der US 1,665,998 wird ebenfalls eine Schneideinrichtung zum Trennen von Ranken oder Teilen von Pflanzen bereitgestellt. Bei der Schneidvorrichtung ist je Seite ein fingerartiges Rad vorgesehen, das mit Federkraft seitlich an das Messer gedrückt wird. Die Spitzen der Räder greifen dabei in den Boden ein und halten die Scheideinrichtung in einer Schrägstellung zum Boden. Bei dieser Art der Schneideinrichtung werden die Ranken nicht durch das Rad angehoben, sondern das Rad zwingt die Ranken in das V-förmige Messer, welches die Anhebung der Ranken infolge der rampenförmigen Ausrichtung des V-Messers bewirkt. Das Rad ergreift seitlich des Messers die Rankenstängel und gewährleisten so einen kontrollierten Schnitt an dem V-förmigen Messer. Andere Schneidvorrichtungen sind noch aus der US 6,286,605 bekannt, die eine Schneidvorrichtung für Weinpflanzen offenbart, sowie aus der US 5,253,468, die ein Fahrgestell zeigt, an dem seitlich rotierende Messer angeordnet sind zum Abtrennen von Ranken an den Flanken eines Hügelbeetes und der US 2,583,571 die eine Schneidvorrichtung zum Trennen von Ranken oder Teilen von Pflanzen offenbart, die ähnlich aufgebaut ist wie die US 1,665,998, wobei der Schneideinrichtung zusätzlich quer zur Fahrtrichtung rotierende Fingerrotoren vorgeschaltet sind, die eine Ausrichtung der Ranken quer zur Pflanzenreihe bewirken.

Als nachteilig bei den Schneidvorrichtungen gemäß dem Stand der Technik wird es angesehen, dass ein kontrollierter Trennvorgang mit den bekannten Schneidvorrichtungen nicht möglich ist.

Hieraus ergibt sich die der Erfindung zugrunde liegende Aufgabe, eine Schneidvorrichtung zum Trennen von Ranken oder Teilen von Pflanzen, die in Reihen oder auf Dämmen wachsen, derart weiter zu bilden, dass ein gezieltes Anheben der Ranken von der Folie bzw. vom Erdreich gewährleistet wird. Weiterhin liegt der Erfindung die Aufgabe zu Grunde, ein geeignetes Fahrgestell für die Schneidvorrichtung bereit zu stellen.

Erfindungsgemäß wird diese Aufgabe durch Anspruch 1 gelöst, vorteilhafte Weiterbildungen ergeben sich aus den Unteransprüchen.

Die Schneidvorrichtung besteht aus wenigstens einer Hebevorrichtung sowie einer Schneideinrichtung, die seitlich parallel zur Reihe oder zum Damm angeordnet sind, wobei die Hebevorrichtung die seitlich aus der Reihe herausragenden Pflanzenstengel oder Ranken vom Erdreich oder von der Folie in einen für die hinter der Hebevorrichtung angeordnete Schneideinrichtung anhebt.

Die Hebevorrichtung umfasst einen Rotor mit einer Drehrichtung mit oder gegen die Fahrtrichtung der Schneidvorrichtung, wobei der Rotor selbst über radial angeordnete, elastisch ausgebildete Finger zum Heben der Ranken verfügt. Dabei besteht die Hebevorrichtung aus einem Rotor mit einem Zwischenraum, in den die Schneideinrichtung greift. Die Hebevorrichtung wird gebildet aus zwei auf einer Welle angeordneten Rotoren, die einen Raum zwischen sich bilden, in den die Schneideinrichtung greift. Die Schneideinrichtung als solches umfasst ein Schneidrad, welches kreissägeartig ausgebildet ist, und wobei das Schneidrad mit einem Teilbereich zwischen die Rotoren greift. Das als Sägeblatt ausgebildete Schneidrad ist ebenfalls auf einer Welle angeordnet, die in der Höhe (H) versetzt zur Rotorwelle gelagert ist. Die Schneidvorrichtung ist dabei an einer als Hebel ausgebildeten pendelnden oder schwenkgelagerten Halterung angeordnet. Die pendelnde oder schwenkgelagerte Halterung ist dabei federentlastet an einem Fahrgestell angeordnet.

Die Schneideinrichtung sowie die Hebevorrichtung sind entweder motorisch oder mechanisch antreibbar. Die Hebevorrichtung mit dem mit dem Boden oder der Folie in Kontakt stehenden Rotor führt neben der Hebung der Pflanzenstengel oder Ranken auch die Schneidvorrichtung in der Höhe.

Dabei kann jeder Seite der zu bearbeitenden Reihe eine Schneidvorrichtung aus wenigstens einer Hebevorrichtung sowie einer Schneideinrichtung, die seitlich parallel zur Reihe oder zum Damm angeordnet sein. Die Hebevorrichtung hebt die seitlich aus der Reihe herausragenden Pflanzenstengel oder Ranken vom Erdreich oder von der Folie in einen für die hinter der Hebevorrichtung angeordnete Schneideinrichtung zugänglichen Schneidhorizont an. Wesentlich ist es dabei, dass das für die Erfassung der Ranken maßgebende elastische Hebeelement stets in Kontakt zur Oberfläche des Dammes bleibt.

Die jeder Reihenseite zugeordnete Schneidvorrichtung besteht aus einer Hebevorrichtung und einer Schneideinrichtung. Die Hebevorrichtung ihrerseits besteht aus zwei auf einer Welle angeordneten Rotoren, die einen Raum zwischen sich bilden, in den die Schneideinrichtung greift. Die Schneideinrichtung als solche umfasst hier ein ebenfalls auf einer Welle angeordnetes Schneidrad, welches kreissägeartig ausgebildet ist und mit einem Teilbereich zwischen die Rotoren greift. Das als Sägeblatt ausgebildete Schneidrad ist in verstellbarer Höhe zur Rotorwelle versetzt gelagert. Dadurch wird gewährleistet, dass insbesondere das Schneidrad nicht die Folie angreift bzw. in das Erdreich greift. Schneideinrichtung und Hebevorrichtung werden motorisch oder mechanisch gegenläufig angetrieben und führen so die erfassten Ranken über den Schneidhorizont in den Bereich der Überdeckung von Schneidrad und Heberotor, wo sie sicher durchtrennt werden.

Die erforderliche Drehzahl der Rotoren muss in einem Verhältnis zur Fahrgeschwindigkeit auf dem Feld stehen. Daher ist auch ein mechanischer Antrieb in Abhängigkeit von der Vorwärtsbewegung auf dem Feld denkbar. Dabei ist es unbedeutend, ob sich der Rotor mit der Fahrtrichtung dreht und das Schneidrad entsprechend nachfolgend angeordnet ist oder ob sich der Rotor gegen die Fahrtrichtung dreht und das Schneidrad entsprechend vorauseilend angeordnet ist, die Differenz zwischen Fahrgeschwindigkeit und Umfangsgeschwindigkeit des Rotors ist hierbei maßgebend.

In vorteilhafter Ausführung ist jede auf einer Reihenseite angeordnete Schneidvorrichtung beweglich aufgehängt, damit bei gegebenen Unebenheiten auf der Folie bzw. auf dem Erdreich die Schneidvorrichtung entsprechend ausweichen bzw. ausgleichen kann. Der mit elastischen Fingern ausgestattete Rotor, der auf der Folie aufsetzt und die ganze federentlastete Schneidvorrichtung trägt, gewährleistet somit eine kontrollierte Höhenführung der Schneidvorrichtung auf der Folie bzw. auf der Dammflanke. In Doppelfunktion des mit den Fingern ausgestatteten Rotors wird zudem sichergestellt, dass der für die Erfassung der Ranken maßgebende elastische Finger stets die Oberfläche des Damms und so auch jede Ranke berührt. Dabei ist der Rotor durch seine Formgebung in der Lage, die Ranken zu erfassen und anzuheben. Das Schneidrad befindet sich in einem sicheren Abstand zur Folie und wird ebenfalls durch den Rotor geführt.

Die Dämme bestehen aus aufgeschütteter Erde und sind daher nie exakt gleichmäßig geformt. Durch das Anlegen der Dämme in vielen Überfahrten über das Feld ist auch der Abstand zueinander schwankend.

Die Erfindung betrifft daher auch die Ausgestaltung eines Fahrgestells für die erfindungsgemäßen Schneidvorrichtungen, das insbesondere diesen Gegebenheiten gerecht wird. Denn das Fahrgestell ist hierbei derart ausgelegt, dass es in Höhe und Richtung selbstständig dem die Pflanzen tragenden Damm folgt und dadurch die jeder Reihe zugeordneten Schneidvorrichtungen immer in gleicher Position relativ zu den zu beschneidenden Pflanzen hält.

Besonders vorteilhaft ist, dass das die Schneidvorrichtung tragende Fahrgestell mittels eines Kardangelenkes allein oder zu mehreren an einem Rahmen mit genormter Anhängung für Front- oder Heckenanbau eines Standart-Schleppers befestigt ist. Dabei ist an dem abgewandten Ende des Fahrgestells wenigstens ein Räderpaar angeordnet ist, dessen Räder im Wesentlichen senkrecht zu den Dammflanken angeordnet sind. Die Achsen der Räder sind vorzugsweise in einem rechten Winkel zueinander an dem Fahrgestell angeordnet. Die als Hebel ausgebildete Halterung für die Schneidvorrichtung ist gegen die Wirkung einer Feder schwenkbar am Fahrgestell gelagert. Dabei ist in vorteilhafter Weise jeweils das Schwenklager für den Hebel auf der Achse der Räder angeordnet.

Die Schneidvorrichtung ist in einem - wenn auch geringen - Abstand zu den Rädern des Fahrgestells angeordnet. Hierbei ist es vorteilhaft, sie an dem vorstehend beschriebenen Fahrgestell auf Achsen anzubringen, die entweder der Radachse entsprechen oder im Wesentlichen parallel dazu liegen. So können die Schneidvorrichtungen auf jeder Seite eigenständige Bewegungen ausführen und somit den kontrollierten Kontakt der Hebevorrichtung zur Folie begünstigen bzw. sicherstellen. Dabei können die Schneidvorrichtungen durch Federn entlastet werden. Als vorteilhaft hat sich die Verwendung von Federn mit einer Bewegungsdämpfung (Gasdruckfedern) erwiesen. Durch Verstellen der Federkraft bzw. des der Feder zugeordneten Hebels kann der Auflagedruck / die Anpresskraft des Rotors auf der Folie reguliert werden und so der Festigkeit und Straffung der Ranken in den verschiedenen Wachstumsphasen angepasst werden.

Ein Ausführungsbeispiel der Erfindung wird anhand der nachstehenden Figuren 1 bis 4 näher erläutert, dabei zeigen:
- Figur 1:: Eine teilweise geschnittene Rückansicht der Schneidvorrichtung sowie des Fahrgestells gemäß der Erfindung;
- Figur 2:: Eine Seitenansicht der Schneidvorrichtung mit Fahrgestell;
- Figur 3:: Eine Einzelansicht der Schneidvorrichtung; und
- Figur 4:: Eine geschnittene Draufsicht auf die Schneidvorrichtung gemäß der Figur 3.

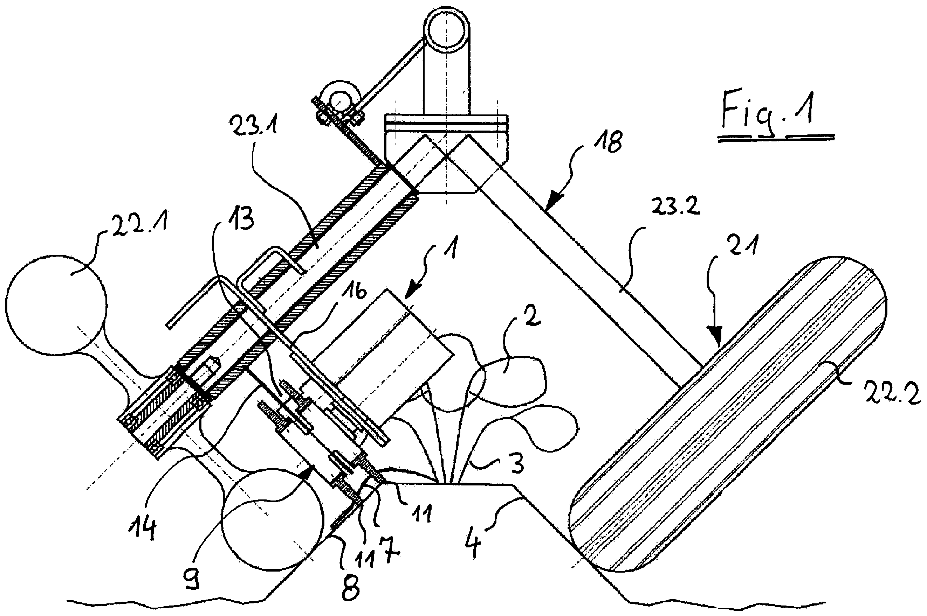

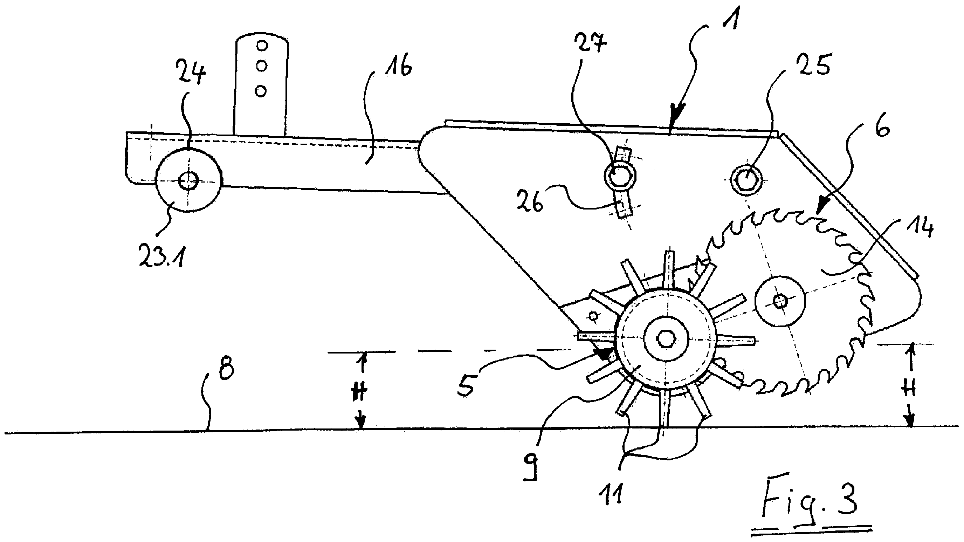

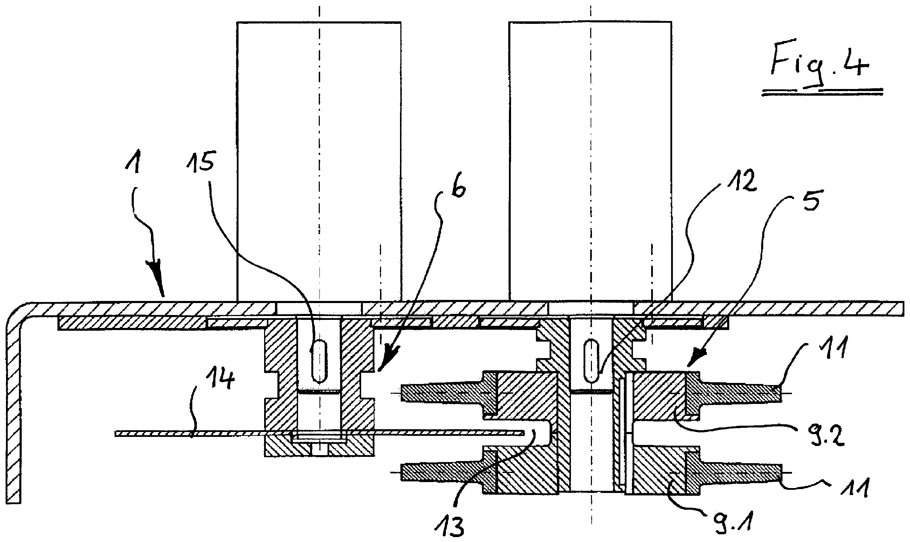

Die Figuren 1, 2, 3 und 4 zeigen insbesondere eine Schneidvorrichtung 1 und ein die Schneidvorrichtung tragendes Fahrgestell 4, 10 zum Trennen von Ranken oder Teilen von Pflanzen 2, die in Reihen 3 oder auf Dämmen 4 wachsen. Dabei ist insbesondere in den Figuren 3 und 4 die Schneidvorrichtung 1 in Einzeldarstellung gezeigt. Dabei besteht die Schneidvorrichtung 1 aus wenigstens einer Hebevorrichtung 5 sowie einer Schneideinrichtung 6, die seitlich parallel zur Reihe 3 oder zum Damm 4 angeordnet ist, und wobei die Hebevorrichtung 5 die quer zur Reihe 3 oder zum Damm 4 rankenden Pflanzenstengel oder Ranken 7 vom Erdreich oder einer Folie 8 in einen für die vor oder hinter der Hebevorrichtung 5 angeordneten Schneideinrichtung 6 zugänglichen Schneidhorizont H anhebt (vergleiche Figur 3).

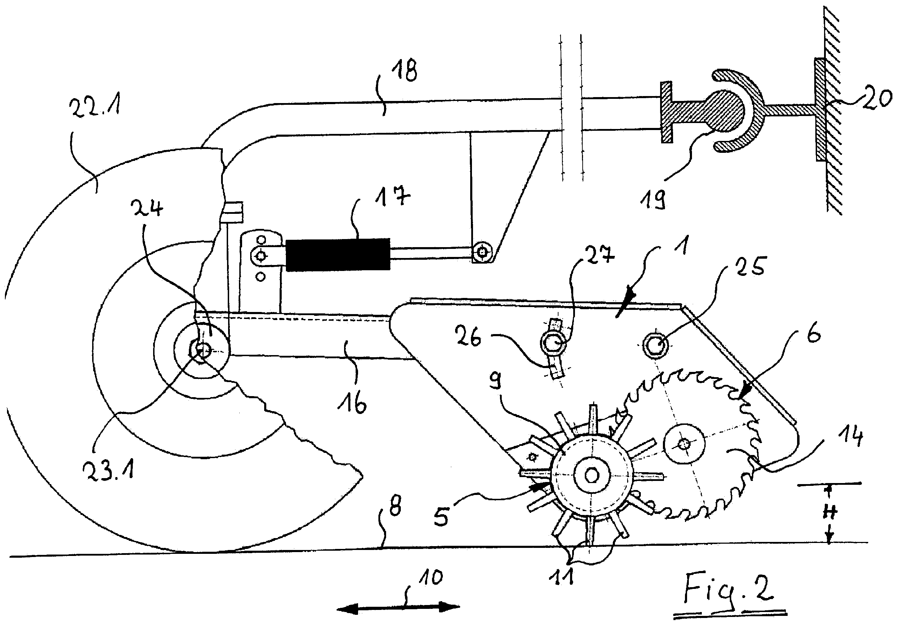

Wie aus der Figur 2, 3 und 4 zu erkennen ist, umfasst die Hebevorrichtung 5 einen Rotor 9 mit einer Drehrichtung gegen die oder mit der Fahrtrichtung 10 der Schneidvorrichtung 1, wobei der Rotor 9 selbst aus radial angeordneten elastisch ausgebildeten Fingern 11 besteht.

Damit wird deutlich, dass insbesondere die elastisch ausgebildeten Finger 11, die auch eine besondere Form, beispielsweise auch löffelartige Form aufweisen können, die auf der Folie bzw. dem Erdreich 8 liegenden Rankenstengel 7 in den Schneidhorizont H anheben, wo sie dann von der Pflanze 2 getrennt werden.

Die Hebevorrichtung 5, deutlicher dargestellt in der Figur 4, besteht hierbei aus zwei auf einer Welle 12 angeordneten Rotoren 9.1 und 9.2, die einen Raum 13 zwischen sich bilden, in den die Schneideinrichtung 6 teilweise eingreift. Die Schneideinrichtung 6 umfasst hierbei ein Schneidrad 14, welches kreissägenartig ausgebildet ist, und wobei das Schneidrad 14 mit einem Teilbereich zwischen die Rotoren 9.1 und 9.2 greift. Das Schneidrad 14 ist hierbei ebenfalls auf einer Welle 15 angeordnet, wobei die Welle 15 um die Höhe H versetzt zur Rotorwelle 12 gelagert ist.

Die Schneidvorrichtung 1 als solches ist hierbei an einem Hebel 16 befestigt, der pendelnd oder schwenkgelagert auf der Achse 23.1 bzw. 23.2 angeordnet ist. Dabei ist die pendelnde oder schwenkgelagerte Schneidvorrichtung 1 über den Hebel 16 und eine Feder 17, die zwischen einem Fahrgestell 18 und dem Hebel 16 wirkt, gewichtsentlastet. Die Schneideinrichtung 1 ist hierbei an dem Hebel 16 justierbar gelagert, wobei sie über einen Lagerpunkt 25 in Wirkverbindung mit einem gebogenen Schlitz 26 mit einer Festestellschraube 27 begrenzt verschwenkbar an dem Hebel 16 angeordnet ist, so dass der Schneidhorizont H leicht verändert werden kann.

In Weiterbildung der Erfindung wird ein Fahrgestell 18 für die Schneidvorrichtung 1 bereit gestellt, wobei das die Schneidvorrichtung 1 tragende Fahrgestell 18 mittels eines Kardangelenkes 19 an einem nicht näher dargestellten Trag- oder Zugfahrzeug, angedeutet mit dem Bezugszeichen 20, befestigt ist. Infolge des Verfahrens des Fahrgestells 18 können die Schneideinrichtung 6 sowie Hebevorrichtung 5 entweder motorisch oder mechanisch angetrieben werden.

Wie aus der Figur 1 und der Figur 2 näher zu erkennen ist, ist an dem abgewandten Ende des Fahrgestells 18 wenigstens ein Räderpaar 21 angeordnet, dessen Räder 22.1 und 22.2 senkrecht zu den Dammflanken angeordnet sind. Hierbei sind die Achsen 23.1 und 23.2 der Räder 22.1 und 22.2 in einem rechten Winkel zueinander an dem Fahrgestell 18 angeordnet.

Das Schwenklager 24 für den Hebel 16 der Schneidvorrichtung 1 ist hierbei auf der Achse 23.1 bzw. 23.2 der Räder 22.1 bzw. 22.2 angeordnet. Somit wird erkennbar, dass auch die Schneideinrichtung 6, ebenfalls wie die Räder 22.1 und 22.2 senkrecht zur Dammflanke angeordnet bzw. ausgerichtet ist.

Es versteht sich nun von selbst, dass beim Überfahren der Schneidvorrichtung 1 über einen Damm 4 oder eine Reihe 3 zunächst der Schneidhorizont für die Schneidvorrichtung 1 durch das Räderpaar 21 festgelegt wird, wobei Korrekturen in der Höhe durch die bewegliche federentlastete Aufhängung der Schneidvorrichtung 1 am Hebel 16 erfolgt infolge der Stützwirkung des Rotors 9 mit seinen Fingern 11 auf der Folie 8. Dabei ergreifen die Finger 11 die Rankenstengel 7 und heben diese in den Schneidhorizont H für die Schneideinrichtung 6, so dass immer ein gezieltes Trennen durch das Schneidrad 14 erfolgt. Das Fahrgestell 18 als solches passt sich hier insbesondere durch das Kardangelenk 19 immer den Gegebenheiten des Damms 4 bzw. der Reihe 3 an, so dass eine gesicherte Aufnahme der Ranken 7 gegeben ist.

## Patentansprüche

1. Schneidvorrichtung (1) und ein die Schneidvorrichtung tragendes Fahrgestell (4, 10) zum Trennen von Ranken oder Teilen von Pflanzen, die in Reihen und / oder auf Dämmen wachsen, wobei die Schneidvorrichtung (1) aus wenigstens einer Hebevorrichtung (5) sowie einer Schneideinrichtung (6) besteht, die seitlich parallel zur Reihe (3) oder zum Damm (4) angeordnet ist, und wobei die Hebevorrichtung (5) die seitlich aus der Reihe herausragenden Pflanzenstängel oder Ranken (7) vom Erdreich oder einer Folie (8) in einen für die hinter oder vor der Hebevorrichtung (5) angeordneten Schneideinrichtung (6) zugänglichen Schneidhorizont (H) anhebt, und die Hebevorrichtung (5) einen Rotor (9) mit einer Drehrichtung mit oder gegen die Fahrtrichtung (10) der Schneidvorrichtung (1) umfasst, wobei die Hebevorrichtung (5) aus einem Rotor (9) mit einem Zwischenraum (13) besteht, in den die Schneideinrichtung (6) greift, wobei der Rotor (9) selbst über radial angeordnete, elastisch ausgebildete Finger (11) zum Heben der Ranken (7) verfügt, und dieser aus zwei auf einer Welle (12) angeordneten Rotoren (9.1) und (9.2) besteht, die den Zwischenraum (13) zwischen sich bilden, in den die Schneideinrichtung (6) greift,
**gekennzeichnet dadurch,**
**dass** die Hebevorrichtung (5) mit dem auf dem Boden oder der Folie (8) in Kontakt stehenden Rotor (9) neben der Hebung der Pflanzenstängel oder Ranken (7) auch die Schneidvorrichtung (1) in der Höhe führt, welche an einer als Hebel (16) ausgebildeten pendelnden oder schwenkgelagerten Halterung angeordnet ist und der pendelnde oder schwenkgelagerte Hebel (16) federentlastet an dem Fahrgestell (18) angeordnet ist.

2. Schneidvorrichtung nach Anspruch 1,
**dadurch gekennzeichnet,**
**dass** die Schneideinrichtung (6) ein Schneidrad (14) umfasst, welches kreissägeartig ausgebildet ist, und wobei das Schneidrad (14) mit einem Teilbereich in den Zwischenraum der Rotoren (9.1) und (9.2) greift.

3. Schneidvorrichtung nach Anspruch 2,
**dadurch gekennzeichnet,**
**dass** das als Sägeblatt ausgebildete Schneidrad (14) ebenfalls auf einer Welle (15) angeordnet ist, die in der Höhe (H) versetzt zur Rotorwelle (12) gelagert ist.

4. Schneidvorrichtung nach den Ansprüchen 1 und 3,
**dadurch gekennzeichnet,**
**dass** das die Schneidvorrichtung (1) tragende Fahrgestell (18) mittels eines Kardangelenkes (19) an einem Tragfahrzeug oder Zugfahrzeug (20) befestigt ist.

5. Schneidvorrichtung nach Anspruch 4,
**dadurch gekennzeichnet,**
**dass** an dem abgewandten Ende des Fahrgestells (18) wenigstens ein Räderpaar (21) angeordnet ist, dessen Räder (22.1) und (22.2) im Wesentlichen senkrecht zu den Dammflanken angeordnet sind.

6. Schneidvorrichtung nach den Ansprüchen 4 und 5,
**dadurch gekennzeichnet,**
**dass** die Achsen (23.1) und (23.2) der Räder (22.1) und (22.2) in einem rechten Winkel zueinander an dem Fahrgestell (18) angeordnet sind.

7. Schneidvorrichtung nach Anspruch 1,
**dadurch gekennzeichnet,**
**dass** der Hebel (16) für die Schneidvorrichtung (1) gegen die Wirkung einer Feder (17) schwenkbar am Fahrgestell (18) gelagert ist.

8. Schneidvorrichtung nach Anspruch 7,
**dadurch gekennzeichnet,**
**dass** jeweils das Schwenklager (24) für den Hebel (16) der Schneidvorrichtung (1) auf der Achse (23.1) bzw. (23.2) der Räder (22.1) bzw. (22.2) angeordnet ist.

9. Schneidvorrichtung nach den Ansprüchen 1 bis 8,
**dadurch gekennzeichnet,**
**dass** die Schneideinrichtung (6) sowie die Hebevorrichtung (5) entweder motorisch oder mechanisch antreibbar sind.

## Claims

1. A cutting device (1) and a chassis (4, 10) carrying the cutting device, for cutting tendrils or parts of plants that grow in rows and/or on ridges, the cutting device (1) consisting of at least one lifting device (5) and a cutting means (6), which is arranged laterally parallel to the row (3) or ridge (4), and the lifting device (5) lifting the plant stalks or tendrils (7) that project laterally out of the row from the soil or a film (8) into a cutting horizon (H) that is accessible to the cutting means (6) arranged behind or in front of the lifting device (5), and the lifting device (5) comprising a rotor (9) having a rotation direction with or counter to the direction of travel (10) of the cutting device (1), the lifting device (5) consisting of a rotor (9) having an interspace (13) in which the cutting means (6) engages, the rotor (9) itself having radially arranged, elastic fingers (11) for lifting the tendrils (7), and said rotor consisting of two rotors (9.1) and (9.2), which are arranged on a shaft (12) and between them form the interspace (13), into which the cutting means (6) engages,
**characterised in that**
the lifting device (5) with the rotor (9) in contact with the soil or the film (8), in addition to lifting the plant stalks or tendrils (7), also vertically guides the cutting device (1), which is arranged on a swinging or pivotably mounted holder in the form of a lever (16), and the swinging or pivotably mounted lever (16) is arranged on the chassis (18) in a spring-balanced manner.

2. The cutting device according to claim 1,
**characterised in that**
the cutting means (6) comprises a cutting wheel (14) in the manner of a circular saw, and wherein the cutting wheel (14) engages with a subregion in the interspace between the rotors (9.1) and (9.2).

3. The cutting device according to claim 2,
**characterised in that**
the cutting wheel (14) in the form of a saw blade is likewise arranged on a shaft (15), which is mounted offset in height (H) in relation to the rotor shaft (12).

4. The cutting device according to claims 1 and 3,
**characterised in that**
the chassis (18) carrying the cutting device (1) is fastened to a carrying vehicle or pulling vehicle (20) by means of a cardan joint (19).

5. The cutting device according to claim 4,
**characterised in that**
on the remote end of the chassis (18) is arranged at least one pair of wheels (21), the wheels (22.1) and (22.2) of which are arranged substantially perpendicularly to the flanks of the ridges.

6. The cutting device according to claims 4 and 5,
**characterised in that**
the axles (23.1) and (23.2) of the wheels (22.1) and (22.2) are arranged at right angles to each other on the chassis (18).

7. The cutting device according to claim 1,
**characterised in that**
the lever (16) for the cutting device (1) is mounted on the chassis (18) such that said lever can pivot counter to the effect of a spring (17).

8. The cutting device according to claim 7,
**characterised in that**
the pivoting bearing (24) for the lever (16) of the cutting device (1) is in each case arranged on the axle (23.1) and (23.2) respectively of the wheels (22.1) and (22.2) respectively.

9. The cutting device according to claims 1 to 8,
**characterised in that**
the cutting means (6) and the lifting device (5) can be driven either by a motor or mechanically.

## Revendications

1. Dispositif de coupe (1) et un châssis (4, 10) supportant le dispositif de coupe pour la séparation de sarments ou parties de plantes, qui poussent en rangs et/ou sur billons, le dispositif de coupe (1) étant composé d'au moins un système de levage (5) ainsi que d'un système de coupe (6), qui est disposé sur le côté parallèlement au rang (3) ou au billon (4) et le système de levage (5) soulevant du sol ou d'une feuille (8) les tiges de plantes ou sarments (7) dépassant latéralement du rang dans un horizon de coupe (H) accessible pour le système de levage (6) disposé derrière ou devant le système de levage (5) et le système de levage (5) comprenant un rotor (9) avec un sens de rotation dans ou contre le sens de la marche (10) du dispositif de coupe (1), le système de levage (5) étant composé d'un rotor (9) avec un espace intermédiaire (13) dans lequel le système de coupe (6) s'engage, le rotor (9) disposant lui-même d'ergots (11) disposés radialement, constitués de manière élastique pour lever les sarments (7) et celui-ci étant composé de deux rotors (9.1) et (9.2) disposés sur un arbre (12), qui forment l'espace intermédiaire (13) entre eux dans lequel s'engage le système de coupe (6),
**caractérisé en ce que**
le système de levage (5) avec le rotor (9) se trouvant en contact sur le sol ou la feuille (8) guide en plus du levage des tiges de plantes ou des sarments (7), également le dispositif de coupe (1) à la hauteur, lequel est disposé sur une fixation pendulaire ou logée en pivotement, constituée comme un levier (16) et le levier pendulaire ou logé en pivotement (16) est disposé de manière compensée par ressort sur le châssis (18).

2. Dispositif de coupe selon la revendication 1,
**caractérisé en ce que**
le dispositif de coupe (6) comprend un roue de coupe (14) laquelle est configurée comme une scie circulaire et la roue de coupe (14) venant en prise avec une zone partielle dans l'espace intermédiaire des rotors (9.1) et (9.2).

3. Dispositif de coupe selon la revendication 2,
**caractérisé en ce**
**qu'**une roue de coupe (14) configurée comme lame de scie est disposée également sur un arbre (15) qui est logé décalé dans la hauteur (H) par rapport à l'arbre de rotor (12).

4. Dispositif de coupe selon les revendications 1 et 3,
**caractérisé en ce que**
le châssis (18) supportant le dispositif de coupe (1) est fixé au moyen d'une articulation à cardan (19) sur un véhicule porteur ou véhicule de traction (20).

5. Dispositif de coupe selon la revendication 4,
**caractérisé en ce que**
sur l'extrémité opposée du châssis (18) est disposée au moins une paire de roues (21), dont les roues (22.1) et (22.2) sont disposées, pour l'essentiel perpendiculairement aux flancs du billon.

6. Dispositif de coupe selon les revendications 4 et 5,
**caractérisé en ce que**
les axes (23.1) et (23.2) des roues (22.1) et (22.2) sont disposés sur le châssis (18) à angle droit l'un par rapport à l'autre.

7. Dispositif de coupe selon la revendication 1,
**caractérisé en ce que**
le levier (16) pour le dispositif de coupe (1) est logé sur le châssis (18) pouvant pivoter à l'encontre de l'effet d'un ressort (17).

8. Dispositif de coupe selon la revendication 7,
**caractérisé en ce que**
le support pivotant (24) pour le levier (16) du dispositif de coupe (1) est disposé sur l'axe (23.1) ou (23.2) des roues (22.1) ou (22.2).

9. Dispositif de coupe selon l'une quelconque des revendications 1 à 8,
**caractérisé en ce que**
le système de coupe (6) ainsi que le système de levage (5) peuvent être entraînés soit de manière motorisée, soit de manière mécanique.
